# EUROPEAN PATENT SPECIFICATION

(11) **EP 1 087 538 B1**
(45) Date of publication and mention of the grant of the patent: **29.06.2005**
(21) Application number: 00120663.0
(22) Date of filing: 21.09.2000
(51) Int. Cl.: H04B 1/48

(54) **Transmitting-receiving switch**
Sende-Empfangsumschalter
Commutateur d'émission-réception

(30) Priority: 24.09.1999 JP 27042499
(43) Date of publication of application: 28.03.2001
(60) Divisional application: 04023589.7
(73) Proprietor: Matsushita Electric Industrial Co., Ltd., Kadoma-shi, Osaka 571-8501 (JP)
(72) Inventor: Nakamura, Hiroyuki, Katano-shi, Osaka 576-0016 (JP); Sakakura, Makoto, Uji-shi, Kyoto 611-0041 (JP); Takada, Junnichi, Kamakura-shi, Kanagawa 248-0025 (JP); Yoshizumi, Jyunichi, Nara 631-0045 (JP)
(74) Representative: Grünecker, Kinkeldey, Stockmair & Schwanhäusser Anwaltssozietät

(56) References cited:
- US-A- 5 473 293
- US-A- 5 911 116
- PATENT ABSTRACTS OF JAPAN vol. 018, no. 549 (E-1618), 19 October 1994 (1994-10-19) -& JP 06 197040 A (MURATA MFG CO LTD), 15 July 1994 (1994-07-15)

## Description

### BACKGROUND OF THE INVENTION

### Field of the Invention

The present invention relates to a transmitting-receiving switch which is utilized for switching signal transmission lines in high frequency circuits such as a radio unit or a portable terminal unit.

### Related Art of the Invention

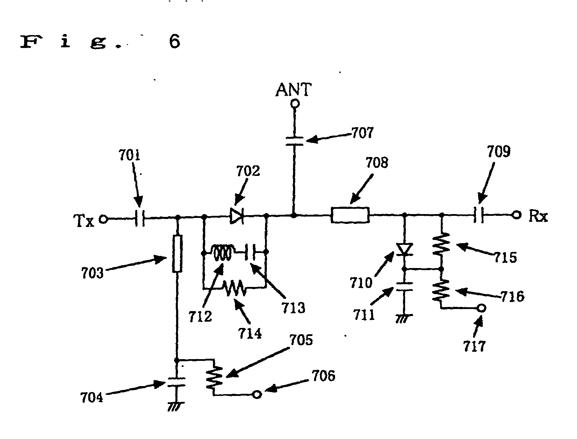

Fig 6 is a diagram showing a configuration of a transmitting-receiving switch according to a prior art (see the Japanese patent publication 2822824 for details).

As shown in the figure, in a conventional transmitting-receiving switch, a transmission circuit Tx is connected to the anode of the first diode 702 via a capacitor 701, and the anode of the first diode 702 is connected to the ground via the first strip line 703, which works as a choke coil, and a capacitor 704. In addition, the middle point between the first strip line 703 and the capacitor 704 is connected to the first control terminal 706 via a resistance 705. The cathode of the first diode 702 is connected to an antenna ANT via a capacitor 707. The second strip line 708 is connected to the antenna ANT and the second strip line 708 is then connected to a receiving circuit Rx via a capacitor 709. Moreover, the middle point between the second strip line 708 and the capacitor 709 is connected to the ground via a serial circuit of the second diode 710 and a capacitor 711.

Furthermore, a serial circuit of an inductor 712 and a capacitor 713 is connected in parallel to the first diode 702 and a resistance 714 is connected in parallel to the first diode 702, that is to say, to the serial circuit of the inductor 712 and the capacitor 713. In addition, another resistance 715 is connected to the second diode 710 in parallel and this resistance 715 is connected to the second control terminal 717 via a resistance 716. Accordingly, the second control terminal 717 is connected to the cathode end of the second diode 710.

The operation of the transmitting-receiving switch according to the prior art which has the above described configuration is described in the following.

In the case that a transmission is carried out in this transmitting-receiving switch, a positive voltage is applied to the first control terminal 706 so that a voltage in the forward direction is applied to the first and the second diodes 702 and 710 to be turned on and a transmission signal from the transmission circuit Tx is transmitted from the antenna ANT. On the other hand, the second strip line 708 is connected to the ground by the second diode 710 to resonate, of which the impedance becomes infinitely large and, therefore, the transmission signal is not transmitted to the receiving circuit Rx.

Next, in the case that a reception is carried out in this transmitting-receiving switch, a voltage application to the first control terminal 706 is halted and a positive voltage is applied to the second control terminal 717. The voltage applied to the second control terminal 717 is divided by the resistances 714, 715 or the like so as to be applied to the first and the second diodes 702 and 710 as a voltage in the backward direction and, therefore, the first and the second diodes 702 and 710 are turned off without fail so that a reception signal is transmitted to the receiving circuit Rx.

In the operation of the above described reception, a capacitance component exists in the diodes and, therefore, in some cases the reception signal leaks to the transmission circuit Tx. On the contrary, this transmitting-receiving switch forms a parallel resonance circuit with a capacitance component of the first diode 702 and the inductor 712 and, thereby, an isolation between the transmission circuit Tx and the antenna ANT is made clear and the first diode 702 is turned off without fail by applying a positive voltage to the second control terminal 717. Therefore, no dispersion is generated in the capacitance component of the first diode 702 so as to be able to gain a stable resonance frequency, to have a complete isolation between the transmission circuit Tx and the antenna ANT and to make smaller an insertion loss between the antenna ANT and the receiving circuit Rx.

The configuration and the operation of the conventional transmitting-receiving switch are as described above, and in such a conventional transmitting-receiving switch, however, a bias voltage is applied to the first diode 702 from the second control terminal 717 in the backward direction by using a resistance voltage division at the time of reception.

Therefore, there is a problem that a sufficient bias voltage cannot be applied in the backward direction to the second diode 710 which contributes greatly to the reception loss and, therefore, the reception loss becomes large.

Document US-A-5, 911, 116 discloses a transmitting-receiving switch-over circuit arrangement for a transceiver including a transmitter terminal and a receiver terminal connected by respective transmitting and receiving circuit sections to a circuit junction point that is coupled to an antenna terminal. A controllable semiconductor switch is connected to the transmitting circuit section. A further controllable semiconductor switch is connected to the receiving circuit section. Control signals are applied to the semiconductor switches so that at least the semiconductor switch connected to the receiving circuit section is controllable independently to assume any one of three stages, namely, fully passing the received RF-signal, fully blocking the received RF-signal and attenuating the received RF-signal.

### SUMMARY OF THE INVENTION

The present invention is provided to solve such a conventional problem and it is the purpose of the invention to provide a transmitting-receiving switch which can reduce a reception loss while maintaining the transmission characteristics through a configuration which can apply a sufficient bias voltage in the backward direction to the diodes at the time of receiving by providing a simple circuit.

According to an aspect of the present invention there is provided a transmitting-receiving switch comprising an antenna terminal connected to an antenna, a transmission terminal connected to a transmission circuit, a reception terminal connected to a receiving circuit, one control terminal for applying a voltage, a distributed or concentrated constant circuit including at least a strip line and having a length of substantially 1/4 wavelength, connected between the antenna terminal and the reception terminal, a first diode and a second diode; wherein the anode of the first diode is connected to the antenna terminal and the one control terminal, the cathode of the first diode is connected to the transmission terminal, the anode of the second diode is connected to the antenna terminal and the control terminal via the constant circuit, and also connected to the reception terminal, the cathode of the second diode is connected to the ground, wherein the one control terminal is adapted to be common to the first and second diode and both diodes are adapted to be DC connected in parallel with respect to the one control terminal between the one control terminal and the ground, wherein a bias voltage from the one control terminal is simultaneously applied to both diodes, thereby a voltage is supplied to turn on or off the both diodes.

### PREFERRED EMBODIMENTS OF THE INVENTION

Embodiments of a transmitting-receiving switch according to the present invention are described in reference to the drawings in the following.

### (First Embodiment)

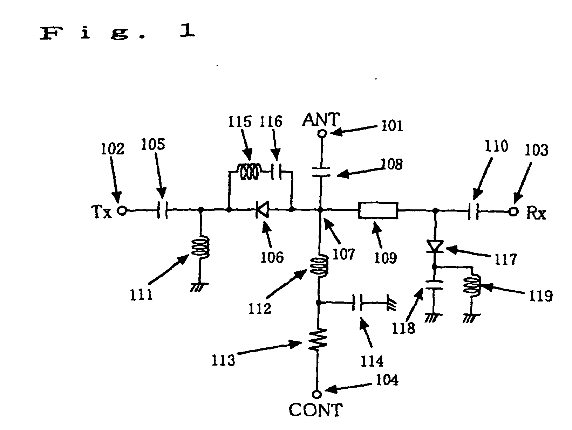

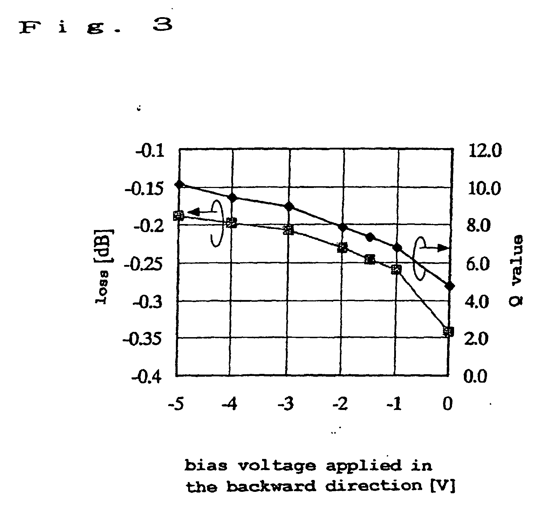

Fig 1 is a diagram showing a transmitting-receiving switch of the first embodiment according to the present invention. In a transmitting-receiving switch of Fig 1, an antenna terminal 101 is connected to an antenna ANT, a transmission terminal 102 is connected to a transmission circuit Tx, a reception terminal 103 is connected to a receiving circuit Rx and a control terminal 104 is connected to a control circuit CONT which carries out a switching control. The transmission terminal 102 is connected to the cathode of the first diode 106 via a capacitor 105 and the anode of the first diode 106 is connected to the antenna terminal 101 via a node 107 and a capacitor 108. The antenna terminal 101 is also connected to the reception terminal 103 via the capacitor 108, the node 107, a strip line 109 and a capacitor 110. And the cathode of the first diode 106 is connected to the ground via an inductor 111. The anode of the first diode 106 is connected to the control terminal 104 via the node 107, an inductor 112 and a resistance 113, and the middle point between the inductor 112 and the resistance 113 is connected to the ground via a capacitor 114.

In addition, a serial circuit of an inductor 115 and a capacitor 116 is connected in parallel to the first diode 106. And the anode of the second diode 117 is connected to the middle point between the strip line 109 and the capacitor 110 and the cathode of the second diode 117 is connected to the ground via a capacitor 118 and an inductor 119 in parallel.

The operation of the transmitting-receiving switch of the present embodiment which has the above described configuration is described as follows:

First, the operation of connection to the transmission circuit is described. In the case that the transmission circuit Tx and the antenna ANT are connected in the transmitting-receiving switch, a positive voltage is applied to the control terminal 104 from the control circuit CONT so as to activate the first and the second diodes 106 and 117. At this time, the positive voltage applied from the control terminal 104 is cut off in the direct current by the capacitors 105, 108, 110, 114 , 116 and 118 so that a positive voltage is applied only to the circuit including the first diode 106, the inductors 111, 112 and the resistance 113 as well as the circuit including the second diode 117, the strip line 109, the inductors 112, 119 and the resistance 113 so that the first and the second diodes 106 and 117 are turned on.

Under the above described condition, the transmission terminal 102 and the antenna terminal 101 are connected when the impedance there-between is lowered by turning on the first diode 106. At this time, though the cathode of the first diode 106 is connected to the ground via the inductor 111, there is no influence of the connection to the ground in the high frequency under the condition where the inductor 111 works as a choke coil by making the impedance sufficiently high in the transmission frequency.

And the impedance on the side of the reception terminal 103 seen from the node 107 becomes too large to transmit a signal from the transmission terminal 102 to the receiving circuit Rx since the strip line 109 is connected to the ground in the high frequency so as to resonate by turning on the second diode 117.

At the time of transmission, the first and the second diodes 106 and 117 are turned on and, under this condition, an inductance component exists in those diodes and, therefore, the impedance of the receiving circuit Rx seen from the node 107 can not be made large enough.

Therefore, in the present embodiment, the cathode of the second diode 117 is connected to the ground via the capacitor 118 and, thereby, a serial resonance circuit is formed of the inductance component in the second diode 117 and the capacitor 118 so that the impedance of the receiving circuit Rx seen from the node 107 becomes large enough. Thereby, no signal from the transmission circuit Tx leaks to the receiving circuit Rx so that an insertion loss of the transmission circuit Tx and the antenna ANT can be made small.

Next, the operation of connection to the receiving circuit is described. In the case that an antenna ANT and a receiving circuit Rx are connected in the transmitting-receiving switch, a negative voltage is applied from the control circuit CONT to the control terminal 104 to turn off the first and the second diodes 106 and 117.

Under the above described condition, a path from the antenna terminal 101 to the transmission terminal 102 is cut off by turning off the first diode 106 and, in addition, the impedance between the reception terminal 103 and the antenna terminal 101 is lowered by turning off the second diode 117 so that the both are connected.

At this time, a capacitance component exists in the first and the second diodes 106 and 117 and, therefore, in the case that a reception signal from the antenna ANT leaks to the transmission circuit Tx, that may sometimes lead to a further increase of the insertion loss of the reception due to the parallel connection of the second diode 117.

However, in a transmitting-receiving switch of the present embodiment, since an inductor 115 is connected to the first diode 106 in parallel, the capacitance component of the first diode 106 and the inductor 115 form a parallel resonance circuit so that the impedance on the transmission circuit side seen from the node 107 becomes quite large and a reception signal from the antenna ANT is transmitted to the receiving circuit Rx without leaking to the transmission circuit Tx.

In addition, the second diode 117 is connected to the first diode 106 in parallel and a negative voltage from the control terminal 104 is applied without being divided so that a sufficient bias voltage is applied in the backward direction and, therefore, the loss at the second diode 117 can be limited to the minimum so as to improve the insertion loss of the reception.

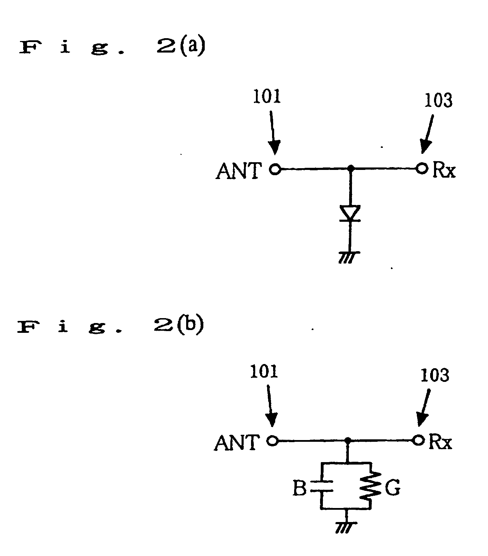

Here, the operation of the second diode 117 is described in detail. Taking only the second diode into account, a configuration is gained wherein the second diode 117 is connected to the ground in parallel at the time of reception as shown in Fig 2 (a), of which the equivalent circuit is represented as in Fig 2 (b) simply by the conductance G and the susceptance B.

By applying a voltage in the backward direction to this second diode 117, the impedance varies due to the magnitude of the bias voltage in the backward direction, that is to say, the Q value of the second diode varies. In this case the Q value is represented as Q=B/G.

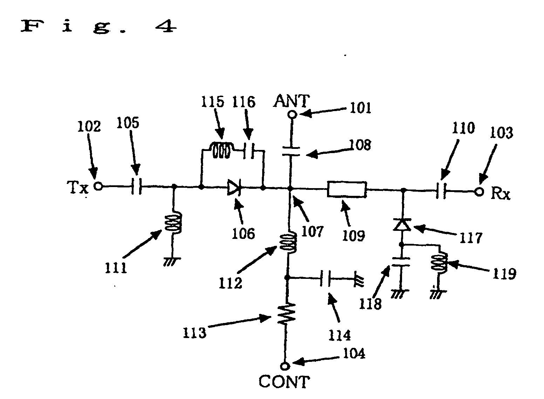

Fig 3 shows the relationships between the magnitude of the bias voltage applied in the backward direction to the second diode 117 in the frequency of 2 GHz band and the Q value as well as the loss between the antenna terminal 101 and the reception terminal 103. In Fig 3, the abscissa denotes the voltage in the backward direction and the ordinate denotes the Q value and the loss.

As is clear from Fig 3, the larger the bias voltage in the backward direction is, the larger the Q value of the second diode 117 is and, the smaller the loss between the antenna terminal 101 and the reception terminal 103 is. That is to say, the larger the bias voltage in the backward direction is, the more the loss at the time of receiving can be improved. For example, it is understood that the loss between the antenna terminal 101 and the reception terminal 103 is approximately 0.35 dB at the time of 0 V and approximately 0.25 dB at the bias voltage in the backward direction of -1.5 V.

Accordingly, the following can be said from Fig 3. That is to say, by applying the bias voltage of -1. 5 V in the backward direction of which the Q value (approximately 0.75) becomes approximately 1.5 times as large as the Q value (approximately 0.5) at the time of zero voltage in the second diode 117, the loss between the antenna terminal 101 and the reception terminal 103 has been improved by approximately 0.1 dB (0.35 dB-0.25 dB=0.1 dB).

As described above, the desirable value of the bias voltage applied in the backward direction to the second diode can be said to be the value where the Q value of the second diode becomes approximately 1.5 times or more compared to the Q value when the bias voltage in the backward direction is the zero voltage.

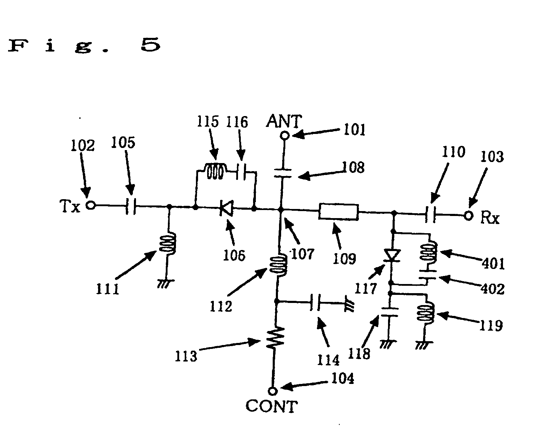

Next, Fig 4 shows the second configuration example of the transmitting-receiving switch according to the first embodiment of the present invention. As shown in the figure, the second configuration example of the transmitting-receiving switch according to the present embodiment is different from the above described first configuration example in the point where the polarities of the first and the second diodes are respectively reversed. That is to say, as shown in the figure, the transmission terminal 102 is connected to the anode of the first diode 106 via the capacitor 105 and, the cathode of the first diode 106 is connected to the antenna terminal 101 via the node 107 and the capacitor 108 in the transmitting-receiving switch. In addition, the anode of the first diode 106 is connected to the ground via the inductor 111. The cathode of the first diode 106 is connected to the control terminal 104 via the node 107, the inductor 112 and the resistance 113 and the middle point between the inductor 112 and the resistance 113 is connected to the ground via the capacitor 114.

The operation of the second configuration example according to the present embodiment which has the above described configuration is as follow: That is to say, in the case the transmission circuit Tx and the antenna ANT are connected, a negative voltage is applied from the control circuit CONT to the control terminal 104 so as to activate the first and the second diodes 106 and 117 so that the transmission terminal 102 and the antenna terminal 101 are connected when the impedance there-between is lowered by turning on the first diode 106. In the same way as the above described first example, in this case, the strip line 109 is connected to the ground in the high frequency so as to resonate by turning on the second diode 117 and, therefore, the impedance on the side of the reception terminal 103 seen from the node 107 becomes too large to transmit a signal from the transmission terminal 102 to the receiving circuit Rx.

Next, in the case that the antenna ANT and the receiving circuit Rx are connected, a positive voltage is applied from the control circuit CONT to the control terminal 104 to turn off the first and the second diodes 106 and 117 and the impedance between the reception terminal 103 and the antenna terminal 101 is lowered so that the both are connected by turning off the second diode 117. In addition, in the same way as the above described first example, the second diode 117 is connected in parallel to the first diode 106 so that a positive voltage from the control terminal 104 is applied without being divided and, therefore, a sufficient bias voltage is applied in the backward direction so as to be able to limit the loss at the second diode 117 to the minimum and to improve the insertion loss of the reception.

In this way, the transmitting-receiving switch of the first embodiment according to the present invention comprises an antenna terminal connected to the antenna, a transmission terminal connected to the transmission circuit, a reception terminal connected to the receiving circuit, the first diode of which the cathode is connected to the above described transmission terminal end and of which the anode is connected to the above described antenna terminal end and the control terminal end, a strip line connected between the above described antenna terminal and the above described reception terminal and the second diode of which the anode is connected to a point between the above described strip line and the above described reception terminal and of which the cathode is connected to the ground, wherein a bias voltage applied in the backward direction to the first and the second diodes 106 and 117 can be made larger and, thereby, the loss at the time of reception can be improved.

Here, the characteristics of Fig 3 as shown in the first embodiment of the present invention vary depending on the utilized diodes, of which the magnitude of the voltage in the backward direction and the improved amount are different from the values in the present examples, however, the effects of lowering the loss at the time of reception are gained in the same way by making the Q value larger through the application of a bias voltage applied in the backward direction. The possible voltage which is applied to said control terminal is set so that Q value of said second diode becomes 1.5 times or more as large as Q value when the positive voltage is not applied or the zero voltage is applied.

The strip line is ideal when the length is 1/4 of the wave length λ with respect to the transmission frequency and may be formed of a distributed constant circuit or a concentrated constant circuit. And the inductors 111, 112, 115 and 119 may be formed of coils or strip lines and, with respect to those inductors, it is desirable to use inductors of which the Q value is high considering the loss.

The capacitor 116 is connected in series to the inductor 115 which is connected in parallel to the first diode 106 in order to prevent the direct current from flowing through the inductor 115, and the values of those elements may be set to the values which provide a parallel resonance between the capacitance component of the first diode 106 and the serial circuit of the inductor 115 and the capacitor 116.

The cathode (the anode in the second configuration example) of the second diode 117 is connected to the ground in parallel via the capacitor 118 and the inductor 119 and, this inductor 119 is to secure the direct current path of the second diode 117 and the values of those elements may be set to the values which provide a serial resonance between the inductance component of the second diode 117 and the parallel circuit of the capacitor 118 and the inductor 119 in the case that the second diode 117 has been turned on.

As shown in Fig 5, the anode and the cathode of the second diode 117 may be connected via the inductor 401 and the capacitor 402. In this case, at the time of reception, that is to say, when the second diode 117 has been turned off, the capacitance component and the serial circuit of the inductor 401 and the capacitor 402 form a parallel resonance circuit, which can implement further effects of lowering the loss.

## Claims

1. A transmitting-receiving switch comprising:
an antenna terminal (101, 107) connected to an antenna (ANT);
a transmission terminal (102) connected to a transmission circuit (Tx);
a reception terminal (103) connected to a receiving circuit (Rx);
one control terminal (104, CONT) for applying a voltage;
a distributed or concentrated constant circuit (109) including at least a strip line and having a length of substantially ¼ wavelength, connected between the antenna terminal (101, 107) and the reception terminal (Rx);
a first diode (106) and a second diode (117); and
wherein the anode of the first diode (106) is connected to the antenna terminal (101, 107) and the one control terminal (104, CONT), the cathode of the first diode (106) is connected to the transmission terminal (102, Tx); the anode of the second diode (117) is connected to the antenna terminal (101, 107) and the one control terminal (104, CONT) via the constant circuit (109), and also connected to the reception terminal (103); the cathode of the second diode (117) is connected to the ground;
**chracterized in that**
the one control terminal (104) is adapted to be common to the first and second diode (106, 117) and both diodes are adapted to be DC connected in parallel with respect to the one control terminal (104) between the one control terminal (104) and the ground, wherein a bias voltage from the one control terminal (104) is simultaneously applied to both diodes, thereby a voltage is supplied to turn on or off the both diodes.

2. A transmitting-receiving switch comprising:
an antenna terminal (101, 107) connected to an antenna (ANT);
a transmission terminal (102) connected to a transmission circuit (Tx);
a reception terminal (103) connected to a receiving circuit (Rx);
one control terminal (104, CONT) for applying a voltage;
a distributed or concentrated constant circuit (109) including at least a strip line and having a length of substantially ¼ wavelength, connected between the antenna terminal (101, 107) and the reception terminal (Rx);
a first diode (106) and a second diode (117); and
wherein the cathode of the first diode (106) is connected to the antenna terminal (101, 107) and the one control terminal (104, CONT), the anode of the first diode (106) is connected to the transmission terminal (102, Rx); the cathode of the second diode (117) is connected to the antenna terminal (101, 107) and the one control terminal (104, CONT) via the constant circuit (109), and also connected to the reception terminal (103); the anode of the second diode (117) is connected to the ground;
**characterized in that**
the one control terminal (104) is adapted to be common to the first and second diode (106, 117) and both diodes are adapted to be DC connected in parallel with respect to the one control terminal (104) between the one control terminal (104) and the ground, wherein a bias voltage from the one control terminal (104) is simultaneously applied to the both diodes, thereby a voltage is supplied to turn on or off both diodes.

3. The transmitting-receiving switch according to claim 1, **characterized in that**, the anode and the cathode of the first diode (106) are connected via a serial circuit of an inductor (115) and a capacitor (116), and the cathode of the second diode (117) is connected to ground via an inductor (119) and a capacitor (118) connected in parallel.

4. The transmitting-receiving switch according to claim 2, **characterized in that**, the anode and the cathode of the first diode (106) are connected via a serial circuit of an inductor (115) and a capacitor (116), and the anode of the second diode (117) is connected to ground via an inductor (119) and a capacitor (118) connected in parallel.

5. The transmitting-receiving switch according to claim 1, **characterized in that**, a positive voltage is applied simultaneously from the control terminal (104) to the first diode and the second diode at the time of transmission, and a negative voltage is applied simultaneously from the control terminal (104) to the first diode and the second diode in the reception mode.

6. The transmitting-receiving switch according to claim 2, **characterized in that**, a negative voltage is applied simultaneously from the control terminal (104) to the first diode and the second diode in the transmission mode, and a positive voltage is applied simultaneously from the control terminal (104) to the first diode and the second diode in the reception mode.

7. The transmitting-receiving switch according to claim 5 **characterized in that** the negative voltage, which is applied to the control terminal (104), is set so that the Q value of the second diode (117) becomes 1.5 times or more larger than the Q value when the negative voltage is not applied or the zero voltage is applied.

8. The transmitting-receiving switch according to claim 6 **characterized in that** the positive voltage, which is applied to the control terminal (104), is set so that the Q value of the second diode (117) becomes 1.5 times or more larger than the Q value when the positive voltage is not applied or the zero voltage is applied.

## Patentansprüche

1. Sende-Empfangs-Umschaltvorrichtung, die umfasst:
einen Antennen-Anschluss (101, 107), der mit einer Antenne (ANT) verbunden ist;
einen Sende-Anschluss (102), der mit einer Sende-Schaltung (Tx) verbunden ist;
einen Empfangs-Anschluss (103), der mit einer Empfangs-Schaltung (Rx) verbunden ist;
einen Steuer-Anschluss (104, CONT) zum Anlegen einer Spannung;
eine verteilte oder konzentrierte Konstantschaltung (109), die wenigstens eine Streifenleitung enthält, eine Länge von im Wesentlichen einer 1/4 Wellenlänge hat und zwischen den Antennen-Anschluss (101, 107) und den Empfangs-Anschluss (Rx) geschaltet ist;
eine erste Diode (106) und eine zweite Diode (117); und
wobei die Anode der ersten Diode (106) mit dem Antennen-Anschluss (101, 107) und dem einen Steuer-Anschluss (104, CONT) verbunden ist, die Kathode der ersten Diode (106) mit dem Sende-Anschluss (102, Tx) verbunden ist, die Anode der zweiten Diode (117) mit dem Antennen-Anschluss (101, 107) und dem einen Steuer-Anschluss (104, CONT) über die Konstantschaltung (109) verbunden ist und ebenfalls mit dem Empfangs-Anschluss (103) verbunden ist und die Kathode der zweiten Diode (117) mit Erde verbunden ist;
**dadurch gekennzeichnet, dass**:
der eine Steuer-Anschluss (104) so eingerichtet ist, dass er von der ersten und der zweiten Diode (106, 117) gemeinsam genutzt wird, und die beiden Dioden so eingerichtet sind, dass sie in Bezug auf den einen Steuer-Anschluss (104) parallel in Gleichstromverbindung mit dem einen Steuer-Anschluss (104) und Erde stehen, wobei eine Vorspannung von dem einen Steuer-Anschluss (104) gleichzeitig an beide Dioden angelegt wird und so eine Spannung zugeführt wird, um die beiden Dioden leitend oder gesperrt zu schalten.

2. Sende-Empfangs-Umschaltvorrichtung, die umfasst:
einen Antennen-Anschluss (101, 107), der mit einer Antenne (ANT) verbunden ist;
einen Sende-Anschluss (102), der mit einer Sende-Schaltung (Tx) verbunden ist;
einen Empfangs-Anschluss (103), der mit einer Empfangs-Schaltung (Rx) verbunden ist;
einen Steuer-Anschluss (104, CONT) zum Anlegen einer Spannung;
eine verteilte oder konzentrierte Konstantschaltung (109), die wenigstens eine Streifenleitung enthält, eine Länge von im Wesentlichen einer 1/4 Wellenlänge hat und zwischen den Antennen-Anschluss (101, 107) und den Empfangs-Anschluss (Rx) geschaltet ist;
eine erste Diode (106) und eine zweite Diode (117); und
wobei die Kathode der ersten Diode (106) mit dem Antennen-Anschluss (101, 107) und dem einen Steuer-Anschluss (104, CONT) verbunden ist, die Anode der ersten Diode (106) mit dem Sende-Anschluss (102, Rx) verbunden ist, die Kathode der zweiten Diode (117) mit dem Antennen-Anschluss (101, 107) und dem einen Steuer-Anschluss (104, CONT) über die Konstantschaltung (109) verbunden ist und ebenfalls mit dem Empfangs-Anschluss (103) verbunden ist und die Anode der zweiten Diode (117) mit Erde verbunden ist;
**dadurch gekennzeichnet, dass**:
der Steuer-Anschluss (104) so eingerichtet ist, dass er von der ersten und der zweiten Diode (106, 117) gemeinsam genutzt wird, und beide Dioden so eingerichtet sind, dass sie in Bezug auf den einen Steuer-Anschluss (104) parallel in Gleichstromverbindung mit dem einen Steuer-Anschluss (104) und Erde stehen, wobei eine Vorspannung von dem einen Steuer-Anschluss (104) gleichzeitig an die beiden Dioden angelegt wird und so eine Spannung zugeführt wird, um die beiden Dioden leitend oder gesperrt zu schalten.

3. Sende-Empfangs-Umschaltvorrichtung nach Anspruch 1, **dadurch gekennzeichnet, dass** die Anode und die Kathode der ersten Diode (106) über eine Reihenschaltung einer Induktivität (115) und einer Kapazität (116) verbunden sind und die Kathode der zweiten Diode (117) über eine Induktivität (119) und eine Kapazität (118), die parallel verbunden sind, mit Erde verbunden ist.

4. Sende-Empfangs-Umschaltvorrichtung nach Anspruch 2, **dadurch gekennzeichnet, dass** die Anode und die Kathode der ersten Diode (106) über eine Reihenschaltung einer Induktivität (115) und einer Kapazität (116) verbunden sind und die Anode der zweiten Diode (117) über eine Induktivität (119) und eine Kapazität (118), die parallel verbunden sind, mit Erde verbunden ist.

5. Sende-Empfangs-Umschaltvorrichtung nach Anspruch 1, **dadurch gekennzeichnet, dass** zum Zeitpunkt des Sendens eine positive Spannung von dem Steuer-Anschluss (104) gleichzeitig an die erste Diode und die zweite Diode angelegt wird und im Empfangs-Betrieb eine negative Spannung von dem Steuer-Anschluss (104) gleichzeitig an die erste und die zweite Diode angelegt wird.

6. Sende-Empfangs-Umschaltvorrichtung nach Anspruch 2, **dadurch gekennzeichnet, dass** im Sende-Betrieb eine negative Spannung von dem Steuer-Anschluss (104) gleichzeitig an die erste Diode und die zweite Diode angelegt wird und im EmpfangsBetrieb eine positive Spannung von dem Steuer-Anschluss (104) gleichzeitig an die erste und die zweite Diode angelegt wird.

7. Sende-Empfangs-Umschaltvorrichtung nach Anspruch 5, **dadurch gekennzeichnet, dass** die negative Spannung, die an den Steuer-Anschluss (104) angelegt wird, so eingestellt ist, dass der Q-Wert der zweiten Diode (117) 1,5 mal oder mehr größer wird als der Q-Wert, wenn die negative Spannung nicht angelegt wird oder die Null-Spannung angelegt wird.

8. Sende-Empfangs-Umschaltvorrichtung nach Anspruch 6, **dadurch gekennzeichnet, dass** die positive Spannung, die an den Steuer-Anschluss (104) angelegt wird, so eingestellt ist, dass der Q-Wert der zweiten Diode (117) 1,5 mal oder mehr größer wird als der Q-Wert, wenn die positive Spannung nicht angelegt wird oder die Null-Spannung angelegt wird.

## Revendications

1. Commutateur d'émission-réception comprenant :
une borne d'antenne (101, 107) connectée à une antenne (ANT) ;
une borne d'émission (102) connectée à un circuit d'émission (Tx) ;
une borne de réception (103) connectée à un circuit de réception(Rx) ;
une borne de commande (104, CONT) pour appliquer une tension ;
un circuit à constante distribuée ou concentrée (109) incluant au moins une ligne à microbandes ayant une longueur de sensiblement 1/4 de la longueur d'onde, connecté entre la borne d'antenne (101, 107) et la borne de réception (Rx) ;
une première diode (106) et une seconde diode (117) ; et
dans lequel l'anode de la première diode (106) est connectée à la borne d'antenne (101, 107) et à la borne de commande (104, CONT), la cathode de la première diode (106) est connectée à la borne d'émission (102, Tx) ; l'anode de la seconde diode (117) est connectée à la borne d'antenne (101, 107) et à la borne de commande (104, CONT) via le circuit à constante (109), et connectée également à la borne de réception (103) ; la cathode de la seconde diode (117) est connectée à la masse ;
**caractérisé en ce que**
la borne de commande (104) est adaptée pour être commune aux première et seconde diodes (106, 117) et les deux diodes sont adaptées pour être connectées en courant continu en parallèle par rapport à la borne de commande (104) entre la borne de commande (104) et la masse, dans lequel une tension de polarisation provenant de la première borne de commande (104) est appliquée simultanément aux deux diodes, faisant qu'une tension est délivrée pour rendre conductrices ou bloquées les deux diodes.

2. Commutateur d'émission-réception comprenant :
une borne d'antenne (101, 107) connectée à une antenne (ANT) ;
une borne d'émission (102) connectée à un circuit d'émission (Tx) ;
une borne de réception (103) connectée à un circuit de réception (Rx) ;
une borne de commande (104, CONT) pour appliquer une tension ;
un circuit à constante distribuée ou concentrée (109) incluant au moins une ligne à microbandes et ayant une longueur de sensiblement 1/4 de la longueur d'onde, connectée entre la borne d'antenne (101, 107) et la borne de réception (Rx) ;
une première diode (106) et une seconde diode (117) ; et
dans lequel la cathode de la première diode (106) est connectée à la borne d'antenne (101, 107) et à la borne de commande (104, CONT), l'anode de la première diode (106) est connectée à la borne d'émission (102, Rx) ; la cathode de la seconde diode (117) est connectée à la borne d'antenne (101, 107) et à la borne de commande (104, CONT) via le circuit à constante (109), et connectée également à la borne de réception (103) ; l'anode de la seconde diode (117) est connectée à la masse ;
**caractérisé en ce que**
la borne de commande (104) est adaptée pour être commune aux première et seconde diodes (106, 117) et les deux diodes sont adaptées pour être connectées en courant continu en parallèle par rapport à la borne de commande (104) entre la borne de commande (104) et la masse, dans lequel une tension de polarisation provenant de la borne de commande (104) est appliquée simultanément aux deux diodes, faisant qu'une tension est délivrée pour rendre conductrices ou bloquées les deux diodes.

3. Commutateur d'émission-réception selon la revendication 1, **caractérisé en ce que**, l'anode et la cathode de la première diode (106) sont connectées via un circuit de série constituée d'une inductance (115) et d'un condensateur (116), et la cathode de la seconde diode (117) est connectée à la masse via une inductance (119) et un condensateur (118) connectés en parallèle.

4. Commutateur d'émission-réception selon la revendication 2, **caractérisé en ce que**, l'anode et la cathode de la première diode (106) sont connectées via un circuit de série constitué d'une inductance (115) et d'un condensateur (116), et l'anode de la seconde diode (117) est connectée à la masse via une inductance (119) et un condensateur (118) connectés en parallèle.

5. Commutateur d'émission-réception selon la revendication 1, **caractérisé en ce que**, une tension positive est appliquée simultanément depuis la borne de commande (104) à la première diode et à la seconde diode au moment de l'émission, et une tension négative est appliquée simultanément depuis la borne de commande (104) à la première diode et à la seconde diode en mode réception.

6. Commutateur d'émission-réception selon la revendication 2, **caractérisé en ce que**, une tension négative est appliquée simultanément depuis la borne de commande (104) à la première diode et à la seconde diode en mode d'émission, et une tension positive est appliquée simultanément depuis la borne de commande (104) à la première diode et à la seconde diode en mode de réception.

7. Commutateur d'émission-réception selon la revendication 5, **caractérisé en ce que** la tension négative, qui est appliquée à la, borne de commande (104), est établie de sorte que la valeur Q de la seconde diode (117) devient 1,5 fois ou plus grande que la valeur Q lorsque la tension négative n'est pas appliquée ou que la tension égale à zéro est appliquée.

8. Commutateur d'émission-réception selon la revendication 6, **caractérisé en ce que** la tension positive, qui est appliquée à la borne de commande (104), est établie de sorte que la valeur Q de la seconde diode (117) devient 1,5 fois ou plus grande que la valeur Q lorsque la tension positive n'est pas appliquée ou que la tension égale à zéro est appliquée.
